# EUROPÄISCHE PATENTSCHRIFT

(11) **EP 2 734 425 B1**
(45) Veröffentlichungstag und Bekanntmachung des Hinweises auf die Patenterteilung: **21.03.2018**
(21) Anmeldenummer: 12740548.8
(22) Anmeldetag: 18.07.2012
(51) Int. Cl.: B60T 8/1755

(54) **VERFAHREN ZUR VERBESSERUNG DER FAHRSTABILITÄT**
METHOD FOR IMPROVING THE DRIVING STABILITY
PROCÉDÉ D'AMÉLIORATION DE LA STABILITÉ DE CONDUITE

(30) Priorität: 19.07.2011 DE 102011079437
(43) Veröffentlichungstag der Anmeldung: 28.05.2014
(73) Patentinhaber: Continental Teves AG&Co. Ohg, 60488 Frankfurt (DE)
(72) Erfinder: RASTE, Thomas, 61440 Oberursel (DE); LAUER, Peter, 61184 Karben (DE); RIETH, Peter, 65343 Eltville (DE)
(74) Vertreter: Hoffmann, Tim Hendrik
(86) Internationale Anmeldenummer: PCT/EP2012/064104
(87) Internationale Veröffentlichungsnummer: WO 2013/011058

(56) Entgegenhaltungen:
- DE-A1- 10 258 167
- DE-A1-102004 044 788
- DE-A1-102008 005 305
- FR-A1- 2 913 386

## Beschreibung

Die Erfindung betrifft ein Verfahren gemäß Oberbegriff von Anspruch 1 und ein System gemäß Oberbegriff von Anspruch 12.

Moderne Kraftfahrzeuge sind vielfach mit Fahrdynamikregelsystemen wie ESC (Electronic Stability Control) ausgestattet, welche das Fahrverhalten eines Kraftfahrzeugs gezielt beeinflussen können. Um die Fahrstabilität zu bewahren, d.h. sicherzustellen, dass das Fahrzeug den Vorgaben des Fahrers folgt, können hierbei automatische radindividuelle Bremskräfte erzeugt und/oder das Antriebsmoment reduziert werden. Der Regeleingriff wird unmittelbar abgeleitet von den Eingaben des Fahrers (Lenken, Bremsen, Gasgeben) und geschieht in einer reaktiven Art und Weise, womit ein Eingriff der Fahrdynamikregelung erst dann erfolgt, wenn das Fahrverhalten um einen messbaren Betrag vom anhand eines Fahrzeugmodells berechneten Fahrerwunsch abweicht. Ein aktives Fahrdynamikregelsystem ist beispielsweise aus der EP 0 792 229 B1 bekannt.

Eine Erhöhung der Fahrsicherheit durch proaktive bzw. vorrausschauende Regeleingriffe kann auf Basis einer Umfeldsensorik (Radar und/oder optische Kameras) erfolgen, die eine Regelung des Abstands zu vorausfahrenden Fahrzeugen (ACC: Adaptive Cruise Control), das Auslösen einer Notbremsung beim Erkennen von Hindernissen (EBA: Emergency Brake Assist) oder Warnungen bzw. Eingriffe beim Überschreiten von Fahrspurbegrenzungen ermöglicht (LDW: Lane Departure Warning).

Aktuell werden Ansätze zur frühzeitigen Warnung des Fahrers vor potenziell gefährlichen Kurvensituationen (CSW: Curve Speed Warning) erprobt. Anhand digitaler Karten werden Informationen über eine vorausliegende Kurve ermittelt, wie z.B. die geometrische Charakteristik. Hierbei wird die eigene Position des Fahrzeugs (Ego-Position) anhand von Satellitennavigation (GPS: Global Positioning System) allein oder in Verbindung mit Inertialsensorik bzw. Trägheitsnavigation durch ein elektronisches Steuergerät (IPC: Inertial and Position Cluster) bestimmt. Derartige CSW-Systeme warnen den Fahrer, falls er sich zu schnell einer Kurve nähert.

So offenbart die DE 10 2009 041 580 A1 ein Verfahren zur vorausschauenden Warnung vor Kurven, bei dem ein Kurvenverlauf mittels Umfeldsensoren, insbesondere Strahlsensoren und/oder Kameras, detektiert und mit einem auf digitalen Karteninformationen basierenden Kurvenverlauf verglichen wird, woraufhin ein Kurvenverifikationssignal erzeugt wird. Das Erzeugen und Ausgeben eines Kurvenwarnsignals erfolgt in Abhängigkeit vom Kurvenverifikationssignal.

Aus der EP 1 805 530 B1 ist ein Verfahren zur Erhöhung der Fahrsicherheit und/oder des Komforts eines Kraftfahrzeugs bekannt, bei dem Daten eine Fahrzeugsteuergeräts, welches zur Steuerung einer sicherheitserhöhenden Aufgabe vorgesehen ist, mit Daten eines Navigationsgeräts bzw. kartographischen Daten logisch verknüpft werden, wobei kartographische Daten gemeinsam mit sensorisch direkt oder indirekt im Fahrzeug erfassten Informationen über den aktuellen Fahrzustand zur Ermittlung eines aktuellen Gefahrenwertes herangezogen werden, und wobei in Abhängigkeit des Gefahrenwertes Eingriffe in die Funktionsgruppen mit sicherheitserhöhenden Aufgaben erfolgen, wobei insbesondere zusätzlich oder an Stelle des Eingriffs eine optische, akustische oder haptische Warnung an den Fahrzeugführer erfolgt.

Für CSW-Systeme bzw. allgemein für Fahrdynamikregelsysteme ist der Reibwert der Straße ein entscheidender Parameter. So bestimmt er die maximale Geschwindigkeit, mit der eine Kurve durchfahren werden kann, da er die übertragbaren Kräfte begrenzt. Der Reibwert hängt von der Paarung Reifen-Straße und somit von den momentanen Umgebungsbedingungen ab, und ist daher im Allgemeinen nicht bekannt. Eine fehlerhafte SChätzung des Reibwerts - oder gar die grundsätzliche Annahme eines hohen Reibwerts - resultieren in einem großen Risiko für den Fahrzeughersteller bzw. Zulieferer, denn eine zu hohe empfohlene (nicht angewarnte) Geschwindigkeit kann zu Regressforderungen aus der Produkthaftung führen.

Die Aufgabe der vorliegenden Erfindung ist es, den Fahrer rechtzeitig vor einer kritischen Fahrsituation zu warnen und/oder Stabilisierungseingriffe einzuleiten, um insbesondere die Wahrscheinlichkeit eines Abkommens von der Straße gegenüber bekannten Fahrdynamikregelsystemen wie ESC weiter zu verringern.

Diese Aufgabe wird durch ein Verfahren gemäß Anspruch 1 bzw. ein System gemäß Anspruch 12 gelöst.

Es wird also ein Verfahren zur Verbesserung der Fahrstabilität eines Kraftfahrzeugs bereitgestellt, bei dem fahrerunabhängige Bremseingriffe ausgelöst werden, wenn anhand von Streckeninformationen und momentanen Positionsdaten des Kraftfahrzeugs eine kritische Fahrsituation zu erwarten ist, wobei der Fahrer über eine Mensch-Maschine-Schnittstelle eine Information zum maximal auszunutzenden Reibwert vorgibt, welcher der Vorhersage einer kritischen Fahrsituation zu Grunde gelegt wird.

Die Vorgabe durch den Fahrer vermeidet eine zu niedrige Reibwertschätzung durch eventuell fehlerhafte Sensordaten (wie den Daten eines Regensensors). Der Fahrer kann bewusst entscheiden, welches Maß an Eingriffen in das Fahrverhalten er wünscht - somit wird ein sportlicher Fahrer nicht durch aus seiner Sicht unangemessene Bremseingriffe gestört. Andererseits kann ein vorsichtiger Fahrer aufgrund der Unterstützung durch das erfindungsgemäße Verfahren auch bei schlechten Wetterverhältnissen wie Schnee und Eis ohne Angst fahren.

Es ist vorteilhaft, wenn anhand von einer oder mehreren momentanen Fahrzustandsgrößen, insbesondere der momentanen Fahrgeschwindigkeit, den Streckeninformationen und den momentanen Positionsdaten des Kraftfahrzeugs für eine vorgegebene Distanz ein zum sicheren Befahren einer vorbestimmten Strecke benötigter Reibwert ermittelt wird, insbesondere unter Berücksichtigung des in der vorgegebenen Distanz vorkommenden minimalen Kurvenradius und der momentanen Fahrgeschwindigkeit.

Die vorbestimmte Strecke kann beispielsweise anhand des eingegebenen Ziels eines Navigationssystems gewählt werden. Alternativ ist es auch möglich, die wahrscheinlichste Strecke zu ermitteln und diese als vorbestimmte Strecke zu wählen. Indem eine Vorschau für eine vorgegebene Distanz erfolgt, kann der Fahrer hinreichend früh gewarnt werden, um selber reagieren zu können, und gegebenenfalls erforderliche Brems- und/oder Antriebseingriffe können sanft erfolgen. Anhand der Stelle mit dem minimalen Kurvenradius und der momentanen Fahrgeschwindigkeit kann eine Abschätzung der auftretenden Querkräfte erfolgen und somit der benötigte Reibwert ermittelt werden.

Vorzugsweise wird die vorgegebene Distanz, über welche der zum sicheren Befahren der vorbestimmten Strecke benötigte Reibwert ermittelt wird, in Abhängigkeit von der momentanen Fahrgeschwindigkeit gewählt. Dies stellt bei schneller Fahrt des Fahrzeugs eine hinreichend früh erfolgende Warnung des Fahrers sicher, während bei langsamer Fahrt keine Vorhersagen über unangemessen lange Zeiträume erfolgen.

Besonders vorteilhaft ist es, wenn der Fahrer über den zum sicheren Befahren der vorbestimmten Strecke benötigten Reibwert informiert wird, insbesondere durch eine visuelle Anzeige, die vorzugsweise zusätzlich eine Information über eine Wetterlage bereitstellt, bei der ein entsprechender Reibwert zu erwarten ist. Der Fahrer kann somit einschätzen, ob er die Fahrgeschwindigkeit verringern sollte oder im Gegensatz dazu sogar noch beschleunigen kann.

Zweckmäßigerweise wird der Fahrer haptisch und/oder visuell darauf hingewiesen, insbesondere durch ein aktive Rückstellkräfte aufweisendes Fahrpedal, wenn zur Vermeidung kritischer Fahrsituationen eine Verringerung der Fahrgeschwindigkeit erfolgen sollte, insbesondere um ein sicheres Befahren der vorbestimmten Strecke zu gewährleisten. Hierbei ist es auch vorteilhaft, dass eine gesonderte Warnung dann erfolgt, wenn der benötigte Reibwert um einen vorgegebenen Schwellenwert über dem maximal auszunutzenden liegt.

Gemäß einer bevorzugten Ausführungsform der Erfindung wird anhand von der Information zum maximal auszunutzenden Reibwert, den Streckeninformationen und den momentanen Positionsdaten des Kraftfahrzeugs für eine vorgegebene Distanz eine Grenzgeschwindigkeit zum sicheren Befahren der vorbestimmten Strecke ermittelt, insbesondere unter Berücksichtigung des in der vorgegebenen Distanz vorkommenden minimalen Kurvenradius, wobei vorzugsweise die vorgegebene Distanz, über welche der zum sicheren Befahren der vorbestimmten Strecke benötigte Reibwert ermittelt wird, in Abhängigkeit von der momentanen Fahrgeschwindigkeit gewählt wird. Die so ermittelte Grenzgeschwindigkeit ermöglicht eine schnelle und sichere Fahrt ans Ziel.

Gemäß einer besonders bevorzugten Ausführungsform der Erfindung wird die momentane Fahrgeschwindigkeit zu der Grenzgeschwindigkeit hingeführt, indem Bremseingriffe an zwei oder mehr Rädern des Kraftfahrzeugs erfolgen und/oder das Antriebsmoment verringert wird. Insbesondere wenn die Fahrzeuggeschwindigkeit die Grenzgeschwindigkeit deutlich übersteigt, kann eine Reaktion des Fahrers zu spät und/oder zu zögerlich bzw. sanft erfolgen, weshalb fahrerunabhängige Bremseingriffe und/oder eine Reduzierung des Antriebsmoments zur Verringerung der Fahrgeschwindigkeit durchgeführt werden.

Gemäß einer ganz besonders bevorzugten Ausführungsform der Erfindung werden die aufgebrachten Bremskräfte in Abhängigkeit von der Differenz zwischen momentaner Fahrgeschwindigkeit und Grenzgeschwindigkeit und/oder der Distanz zu dem Punkt der Strecke mit minimalem Kurvenradius gewählt. Dies ermöglicht eine zügige Fahrt und vermeidet unangemessen starke Bremseingriffe.

Hierbei ist es vorteilhaft, die aufgebrachten Bremskräfte begrenzt und/oder die Änderung des Antriebsmoments gegenüber der Fahrpedalstellung begrenzt werden, insbesondere derart, dass die Fahrzeuglängsverzögerung einen vorbestimmten Verzögerungsschwellenwert nicht überschreitet. Diese Begrenzung der Bremsverzögerung ermöglicht eine Erhöhung des Fahrkomforts, wobei gegebenenfalls nahe des Scheitelpunkts der Kurve ein ESC-Eingriff zum Aufbringen eines zusätzlichen Giermoments erfolgen kann.

Zweckmäßigerweise wird die vom Fahrer vorgegebene Information zum maximal auszunutzenden Reibwert anhand von einer oder mehreren weiteren unabhängigen Größen, wie den Daten eines Regensensors und/oder aktuellen Wetterinformationen, modifiziert und/oder plausibilisiert, wobei insbesondere eine Minimumbildung zweier unabhängiger Werte erfolgt. Somit kann der vom Fahrer vorgegebene maximale Reibwert angepasst werden, um beispielsweise weiter verschlechterten Wetterbedingungen Rechnung zu tragen. Dies kann beispielsweise anhand von per Funk empfangenen Wetterinformationen ermittelt werden.

Es ist vorteilhaft, wenn anhand der vom Fahrer vorgegebenen Information zum maximal auszunutzenden Reibwert ein erster Reibwert und ein zweiter Reibwert bestimmt werden, wobei der erste Reibwert kleiner als der zweite Reibwert ist, dass anhand des ersten Reibwerts ermittelt wird, ob ein Hinweis an den Fahrer erfolgen soll, und dass anhand des zweiten Reibwerts ermittelt wird, ob Bremseingriffe zur Verringerung des Fahrzeuggeschwindigkeit erfolgen müssen. Somit erfolgt eine Warnung vergleichsweise früh, aber Bremseingriffe erfolgen nur dann, wenn sie unerlässlich sind.

Bevorzugt erfolgt ein Bremseingriff erst dann, wenn das Vorliegen einer Kurve durch eine Lenkbewegung des Fahrers und/oder das Setzen eines Blinkers und/oder anhand von Informationen einer Umfeldsensorik, insbesondere einer oder mehrerer Kameras, bestätigt wurde. Durch sein Einlenken kann der Fahrer bestätigen, dass eine Unterstützung erwünscht ist. Aber auch durch Umfeldsensorik, wie Radar oder Kameras, kann eine Plausibilisierung erfolgen.

Vorzugsweise weist das Kraftfahrzeug Mittel zur Regelung des Abstands zu einem vorausfahrenden Fahrzeug und/oder Mittel zur Auslösung einer Notbremsung beim Erkennen von Hindernissen auf der Fahrbahn auf, wobei die Mittel ein mit Umfeldsensorik verbundenes elektronisches Steuergerät umfassen, und der Sollwert der Abstandsregelung und/oder der Mindestabstand, bei dessen Unterschreiten eine Notbremsung erfolgt, werden in Abhängigkeit der vom Fahrer vorgegebenen Information zum maximal auszunutzenden Reibwert gewählt und/oder modifiziert wird. Das erfindungsgemäße Verfahren kann somit dazu verwendet werden, bestehende ACC-Systeme zu verbessern. Hierbei stellt der Fahrer über eine geeignete Mensch-Maschine-Schnittstelle einen maximalen Reibwert ein, und das System greift komfortabel ein, um die Fahrgeschwindigkeit der jeweiligen Kurve anzupassen. Somit kann eine ACC-Regelung über eine bloße Abstandsregelung zum vorausfahrenden Fahrzeug hinaus eine weitere Erhöhung der Fahrsicherheit bereitstellen. Darüber hinaus kann auch durch eine Vermeidung von für Fahrgäste unangenehmen hohen Querbeschleunigungen ein verbesserter Komfort ermöglicht werden. Entsprechend kann auch die Eingriffsdistanz eines Notbremsassistenten entsprechend des vom Fahrer vorgewählten Reibwerts modifiziert werden, um die Fahrsicherheit zu erhöhen.

Die Erfindung betrifft weiterhin ein System zur Regelung der Fahrstabilität eines Kraftfahrzeugs, das Mittel zum fahrerunabhängigen Aufbau von Bremskräften an einem oder mehreren Rädern des Kraftfahrzeugs, Mittel zur Erfassung von einer Information über den momentanen Fahrzustand, insbesondere einen Gierratensensor und/oder einen Lenkwinkelsensor und/oder einen Querbeschleunigungssensor und/oder Raddrehzahlsensoren, Mittel zur Bestimmung der aktuellen Fahrzeugposition, insbesondere einen GPS-Empfänger, Mittel zur Bereitstellung von Streckeninformationen, insbesondere ein Navigationssystem mit digitalen Kartendaten, und eine Mensch-Maschine-Schnittstelle zur Eingabe von einer Information zum maximal auszunutzenden Reibwert aufweist, insbesondere einen Schalter. Vorzugsweise umfasst das System ein elektronisches Steuergerät, welches ein erfindungsgemäßes Verfahren ausführt.

Zweckmäßigerweise umfasst das System Mittel für eine haptische und/oder visuelle Information des Fahrers über eine zu erwartende kritische Situation, insbesondere ein aktive Rückstellkräfte aufweisendes Fahrpedal, und vorzugsweise Mittel zum Schätzen eines zum sicheren Befahren einer vorbestimmten Strecke benötigten Reibwerts.

Es ist vorteilhaft, wenn das System Mittel zur Regelung des Abstands zu vorausfahrenden Fahrzeugen und/oder Mittel zur Regelung der Fahrzeuggeschwindigkeit aufweist, wobei das oder die Mittel ein mit Umfeldsensorik, vorzugsweise einer oder mehrerer Kameras, verbundenes elektronisches Steuergerät umfassen.

Bevorzugt umfasst das System Mittel zur Modifikation des Fahrwerks, insbesondere aktive Dämpfer und/oder aktive Wankstabilisatoren und/oder eine Überlagerungslenkung an der Vorderachse und/oder eine Hinterachslenkung. Somit können diese zusätzlichen aktiven Stellglieder, die eine Verbesserung des Fahrverhaltens in der Kurve bewirken können, bei Annäherung an eine Kurve angesteuert bzw. in die Fahrstabilitätsregelung einbezogen werden.

Ferner betrifft die Erfindung die Verwendung eines erfindungsgemäßen Systems in einem Kraftfahrzeug, dass zumindest zeitweise von einem oder mehreren Elektromotoren angetrieben wird. Hierbei kann in Hybridfahrzeugen auch eine angepasste Bremsstrategie gewählt werden, bei der das Abbremsen über Schleppmoment der als Generator betriebenen Elektromotoren erfolgt.

Gemäß einer bevorzugten Ausführungsform der Erfindung erfolgt beim Ausfahren aus der Kurve eine Beschleunigung des Fahrzeugs auf die der Fahrpedalstellung entsprechende Fahrgeschwindigkeit (die das Fahrzeug also vor dem Bremseingriff hatte). Dies kann insbesondere mit Hilfe von rekuperierter elektrischer Energie über einen oder mehrere Elektromotoren erfolgen.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein Diagramm des Zusammenhangs zwischen Kurvengeometrie und fahrdynamischem Potential
- Fig. 2: eine beispielhafte Anzeige zur Warnung des Fahrers,
- Fig. 3: ein allgemeines Schema zur Eingriffsstrategie,
- Fig. 4: eine schematische Übersicht eines beispielhaften Systems zur Regelung der Fahrstabilität,
- Fig. 5: ein erstes Ausführungsbeispiel des erfindungsgemäße Verfahrens, und
- Fig. 6: ein zweites Ausführungsbeispiel des erfindungsgemäßen Verfahrens.

Gegenstand der Erfindung sind ein Verfahren und ein System zur Verbesserung der Fahrstabilität mit Informationen über den zukünftigen Straßenverlauf. Erfindungsgemäß schätzt der Fahrer die Umweltbedingungen selbst ein und wählt über eine geeignete Mensch-Maschine-Schnittstelle (HMI: Human Machine Interface) eine geeignete Vorgabe für den Reibwert. Gemäß einer bevorzugten Ausführungsform der Erfindung erfolgt diese Vorgabe über einen Schalter bzw. Taster, der den maximal auszunutzenden Reibwert auf einen festen vorgegebenen Wert begrenzt. Gemäß einer weiteren bevorzugten Ausführungsform der Erfindung wählt der Fahrer über einen Wahlschalter die möglichen Bedingungen Trocken-Nass-Schnee-Eis selbst vor, wobei den Bedingungen jeweils ein entsprechender Reibwert zugeordnet wird. Gemäß einer alternativen bevorzugten Ausführungsform der Erfindung kann der Fahrer auswählen ob eine sportliche, eine normale oder eine komfortable Eingriffstrategie verfolgt werden soll. Prinzipiell sind auch andere Ausführungsformen, wie eine Kombination aus Reibwertvorwahl und Wahl der Eingriffsstrategie denkbar. Auch die Verwendung eines Touchscreens als HMI ist möglich.

Gemäß einer bevorzugten Ausführungsform der Erfindung, die auch mit den oben genannten kombiniert werden kann, wird ein maximaler Reibwert (z.B. µ=0,5) vorgegeben und mit dem vom Fahrer eingestellten Reibwert und gegebenenfalls mit dem von einem ESC-System während eines Eingriffs ermittelten Reibwert arbitriert, wobei insbesondere eine Minimumbildung stattfindet.

Der vom Fahrer gewählte Reibwert (bzw. der durch Arbitrierung ermittelte begrenzte Wert) legt hierbei vorzugsweise nicht nur die maximale Querbeschleunigung in der Kurve fest, sondern begrenzt zweckmäßigerweise weiterhin die Gierratenreferenzgeschwindigkeit und macht das ESC empfindlicher, wodurch das Fahrzeug also in Richtung eines untersteuernden und damit stabilen Verhaltens beeinflusst wird. Es ist also vorteilhaft, in Abhängigkeit von der jeweiligen Einstellung das ESC-System vorzukonditionieren, indem der Reibwert für die Berechnung der Gierratenreferenzgeschwindigkeit abgesenkt wird. Alternativ oder ergänzend kann auch eine Anpassung der ESC-Aktivierungsschwellen nach Maßgabe des vorgewählten Reibwerts erfolgen.

Zweckmäßigerweise umfassen Verfahren bzw. System eines oder mehrere von drei vorzugsweise aufeinander aufbauenden Teilen:
1. Bestimmung des fahrdynamischen Potenzials des Fahrzeugs
2. Warnstrategie
3. Eingriffsstrategie

Das fahrdynamische Potenzial wird bevorzugt anhand eines Stabilitätsindexes quantifiziert, der auf der Basis von gemessenen oder geschätzten Geschwindigkeitssignalen (Gierrate, Fahrzeuggeschwindigkeit, Schwimmwinkel) und/oder Kraftsignalen (Längskraft, Querkraft, Giermoment bzw. entsprechende Beschleunigungen) bestimmt werden kann. Für das erfindungsgemäße Verfahren ist es prinzipiell gleichgültig, ob die Ermittlung des fahrdynamischen Potentials anhand kinematischer oder dynamischer Größen erfolgt - hierbei kann berücksichtigt werden, welche Größen durch eine Fahrdynamikregelung mit minimalem Aufwand bereitgestellt werden können.

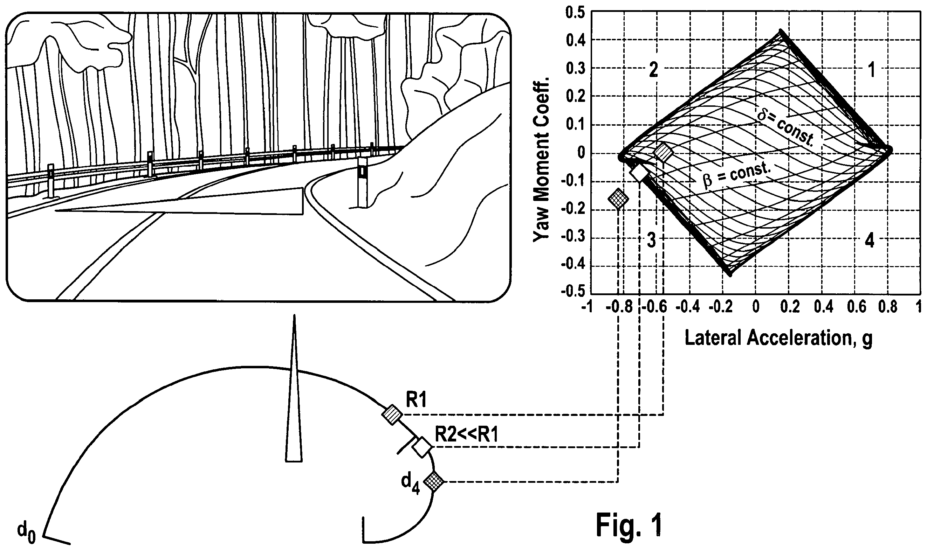

In Figur 1 ist ein Diagramm des Zusammenhangs zwischen Kurvengeometrie und fahrdynamischem Potential gezeigt. Der Radius einer zu durchfahrenden Kurve wird bevorzugt aus Daten eines Navigationssystems ermittelt. Hierbei werden vorzugsweise momentane Kurvenradien an mehreren Punkten der Kurve betrachtet und insbesondere der minimale auftretende Kurvenradius ermittelt. Der Eintritt des Fahrzeugs in die Kurve ist mit d₀ bezeichnet, die beispielhafte Kurve zieht sich bis zum Scheitelpunkt d₄ zu, woraufhin der Kurvenradius konstant bleibt. Anhand von den momentanen Fahrzustandsgrößen, insbesondere der Fahrgeschwindigkeit, werden die für das Durchfahren der Kurve benötigte Gierbeschleunigung (bzw. das Giermoment: Yaw Moment) und Querbeschleunigung (Lateral Acceleration) ermittelt und mit dem von dem Fahrzeug maximal bereitgestellten Werten verglichen. Diese werden z.B. durch das Vorhandensein einer Hinterachslenkung bzw. allgemein durch die Fahrwerksauslegung beeinflusst und ganz wesentlich durch den vorliegenden Reibwert bestimmt. Bei einem festen vorgegebenen Reibwert liegt z.B. eine Kurve mit Radius R1 deutlich innerhalb des hinsichtlich der Fahrstabilität unkritischen Bereichs, während eine Kurve mit dem Radius R2<R1 am Rande der Fahrstabilität liegt, d.h. die Kurve kann unter den gegebenen Bedingungen gerade noch ohne einen Verlust der Fahrstabilität durchfahren werden. Bei Kurven mit einem noch kleineren Kurvenradius würde eine kritische Fahrsituation auftreten, weshalb eine Warnung des Fahrers und/oder ein Stabilisierungseingriff erfolgen sollten.

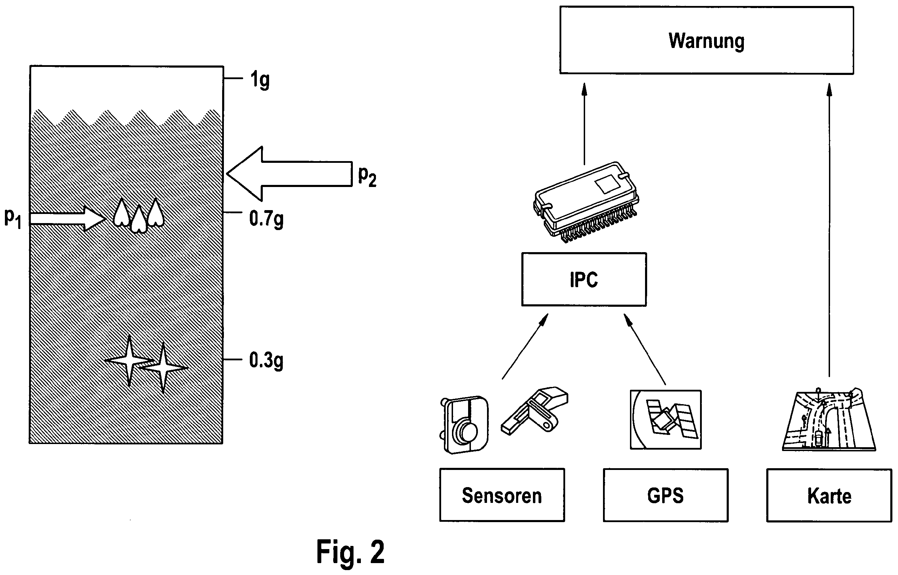

Figur 2 zeigt ein Ausführungsbeispiel einer Strategie bzw. einer Anzeige zur Warnung des Fahrers vor einer kritischen Situation. Zweckmäßigerweise werden dem Fahrer die erforderlichen Straßenbedingungen angezeigt, um die vorausliegende Kurve bei der aktuell gefahrenen Geschwindigkeit gefahrlos zu passieren. Der zur Vermeidung kritischer Fahrsituationen benötigte Reibwert bzw. die benötigten Wetterbedingungen, um die nächste Kurve mit der aktuellen Fahrzeuggeschwindigkeit zu durchfahren, werden vorzugsweise über einen Pfeil p₂ angezeigt. Ergänzend dazu ist es besonders vorteilhaft, den vom Fahrer vorgewählten maximalen Reibwert anzuzeigen, insbesondere über einen Pfeil p₁. Beispielsweise wird in einem Display der Pfeil p₂ auf "Trocken" gesetzt, wenn ein Durchfahren der nächsten Kurve mit der aktuellen Fahrzeuggeschwindigkeit zu einer Querbeschleunigung von größer 1g (mit der Erdbeschleunigung g=9,81m/s²) führen würde, oder auf "Schnee" gesetzt, wenn die erwartete Querbeschleunigung bei 0,3g liegt. Somit kann der Fahrer einschätzen, ob zur Vermeidung einer kritischen Fahrsituation eine Verringerung der Geschwindigkeit erfolgen sollte, oder ob selbst eine Erhöhung der Geschwindigkeit unkritisch ist.

Die Warnstrategie besteht also vorzugsweise darin, den Fahrer dabei zu unterstützen, eine dem aktuell vorliegenden Reibwert angepasste Fahrzeuggeschwindigkeit zu wählen. Hierbei werden Informationen von den Fahrzustand charakterisierenden Sensoren (Sensoren) und eines GPS-Empfängers (GPS) gegebenenfalls in Verbindung mit Trägheitsnavigation in einem elektronischen Steuergerät (IPC) zur Bestimmung der Fahrzeugposition und des aktuellen Fahrzustandes (insbesondere der Fahrzeuggeschwindigkeit) ausgewertet. Anhand von mittels einer digitalen Karte ermittelten Informationen über den wahrscheinlichsten zukünftigen Fahrzeugkurs erfolgt eine Warnung, wenn das Eintreten einer kritischen Fahrsituation, bei der das Fahrzeug den Vorgaben des Fahrers nicht mehr folgt, zu erwarten ist. Zweckmäßigerweise erfolgt neben der Anzeige des benötigten Reibwerts also eine zusätzliche Warnung des Fahrers, wenn sich das Fahrzeug mit einer zu hohen Geschwindigkeit auf eine Kurve zubewegt und bei der gewählten Voreinstellung ein Konflikt zur reibwertabhängigen und mit Hilfe von z.B. Kartendaten ermittelten Kurvengrenzgeschwindigkeit entsteht.

Für eine weitere Verbesserung der Fahrsicherheit können die aktiven Fahrdynamikregelsysteme auf einen Eingriff vorbereitet werden, insbesondere indem die Aktivierungsschwellen abgesenkt werden. Ferner kann eine weitere Beschleunigung des Fahrzeugs verhindert oder ein gezielter Bremseneingriff durchgeführt werden. Falls das Fahrzeug aktive Dämpfer und/oder aktive Wankstabilisatoren und/oder eine Überlagerungslenkung an der Vorderachse und/oder eine Hinterachslenkung aufweist, so können diese zusätzlichen aktiven Stellglieder angesteuert werden, um eine Verbesserung des Fahrverhaltens in der Kurve zu bewirken.

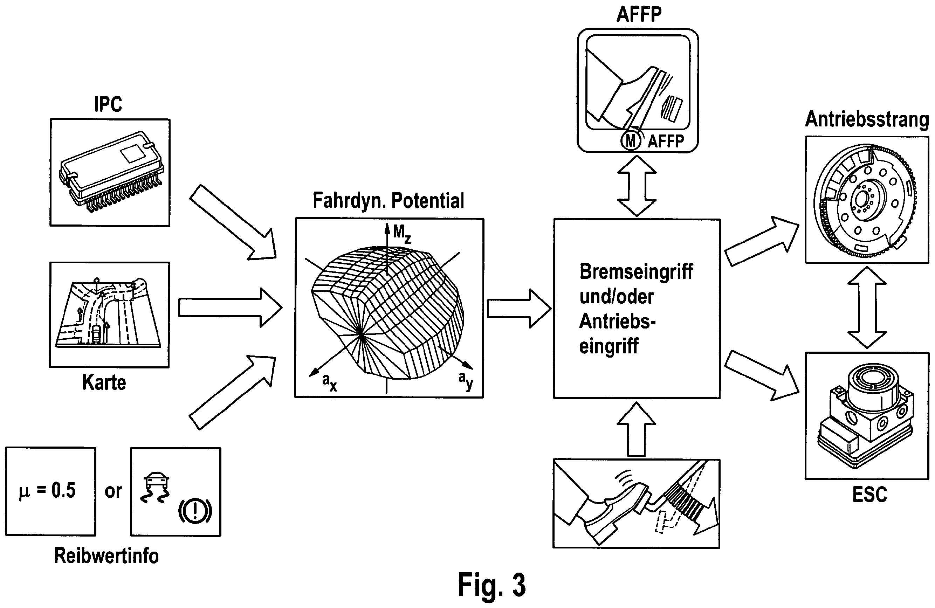

In Figur 3 ist ein Beispiel für eine erfindungsgemäße Eingriffsstrategie gezeigt. Die Positionsdaten des Fahrzeugs werden in einem elektronischen Steuergerät (IPC) über Trägheitsnavigation und/oder Daten eines GPS-Empfängers bestimmt, anhand einer digitalen Karte werden die relevanten Informationen über den zukünftigen Fahrzeugkurs ermittelt und über Fahrervorgaben, eventuell ergänzt durch Sensordaten und/oder eine Reibwertschätzung von an sich bekannter Fahrdynamikregelsystemen, wird der momentan vorliegende Reibwert ermittelt (Reibwertinfo). Mittels eines Vergleichs des möglichen fahrdynamischen Potentials des Fahrzeugs mit dem für den bevorstehenden Kurs benötigten, wird eine zu erwartende kritische Situation erkannt. Daraufhin erfolgt eine adaptive Schleppmoment- und/oder Bremsmomentregelung (Bremseingriff und/oder Antriebseingriff), wobei insbesondere Eingriffszeitpunkt und Intensität des Eingriffs nach Maßgabe des Vergleichsergebnisses gewählt werden. Vorzugsweise wird der Fahrer durch die Rückmeldung eines Fahrpedals mit aktiver Rückmeldung haptisch auf die Gefahr hingewiesen. Die Eingriffe werden durch ein elektronisches Bremsensteuergerät (ESC) und/oder eine Motorregelung (Antriebsstrang) angefordert bzw. durchgeführt.

Die Eingriffsstrategie ist zweckmäßigerweise abhängig von den Reaktionen des Fahrers. Verringert er seine Geschwindigkeit nicht, so kann er z.B. mit Hilfe eines aktiven Gaspedals (AFFP: Active Force Feedback Pedal) zum Gaswegnehmen bewegt werden. Löst der Fahrer das Fahrpedal, so kann das Schleppmoment gezielt angepasst werden, so dass das Fahrzeug bis zum Scheitelpunkt der Kurve auf die Zielgeschwindigkeit verzögert wird. Bei Elektro- oder Hybridfahrzeugen wird gemäß einer besonders bevorzugten Ausführungsform der Erfindung eine entsprechende adaptive Strategie für das regenerative Bremsen angewandt. Wenn der Fahrer das Bremspedal betätigt, so erfolgt vorzugsweise eine gezielte Erhöhung der Bremswirkung, insbesondere radindividuell.

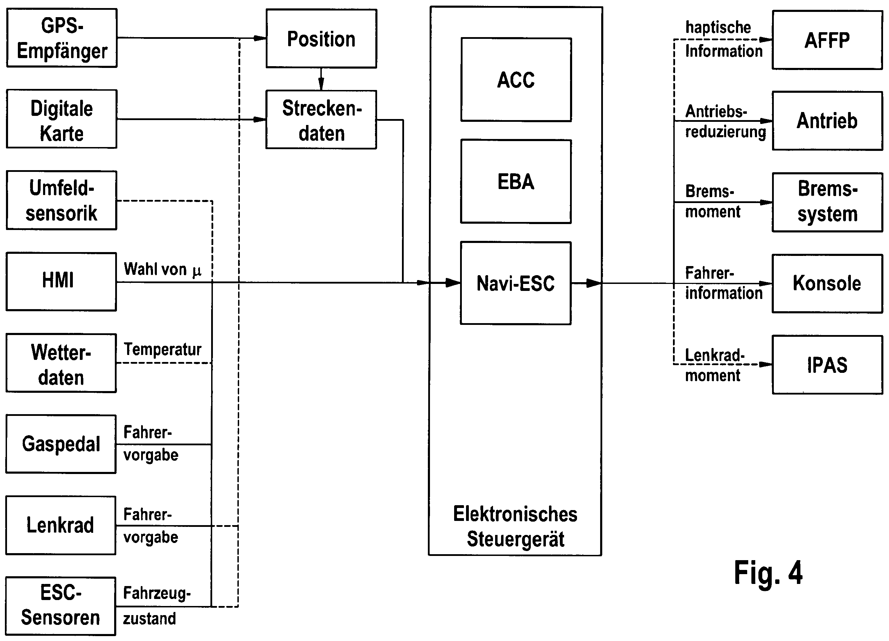

Figur 4 zeigt eine schematische Übersicht eines beispielhaften Systems zur Regelung der Fahrstabilität, bei dem in der linken Spalte Sensoren bzw. Schnittstellen dargestellt sind, über die Informationen zur aktuellen Fahrsituation und den Vorgaben des Fahrers empfangen werden; in der Mitte sind die von einem oder mehreren elektronischen Steuergeräten bereitgestellten Funktionen angedeutet, während in der rechten Spalte Aktoren bzw. Mittel zur Information des Fahrers (wie eine Anzeige) dargestellt sind. Mit duchgezogenen Pfeilen ist der Signalfluß dargestellt, wobei zusätzlich optionale Signale gestrichelt angedeutet sind.

Die Position des Fahrzeugs wird mittels Satellitennavigation bestimmt. Ergänzend können auch die Informationen der ESC-Sensoren wie z.B. Gierrate und Querbeschleunigung und/oder Informationen einer Umfeldsensorik, d.h. einer oder mehrerer Kameras bei der Positionsbestimmung berücksichtigt werden. Hierbei können "Map-Matching"-Algorithmen, also der Abgleich mit Informationen einer digitalen Karte (wie z.B. in WO 2008/145509 A1 beschrieben), eingesetzt werden.

Mit Hilfe von Umfeldsensorik können Funktionen wie eine automatische Abstandsregelung zu vorausfahrenden Fahrzeugen (ACC: Automatic Cruise Control) oder ein Notbremsassistent (EBA: Emergency Brake Assist) realisiert sein.

Das System stellt eine Mensch-Maschine-Schnittstelle bereit, über die der Fahrer Informationen zum maximal auszunutzenden Reibwert eingibt. Hierbei kann es sich beispielsweise um einen Schalter handeln, bei dessen Betätigung der maximal ausgenutzte Reibwert auf einen vorgegebenen Wert zwischen 0,9 und 0,1 (vorzugsweise 0,3) begrenzt wird. Dies gibt insbesondere die maximal auftretende Querbeschleunigung vor.

Falls das Fahrzeug über Sensoren bzw. Schnittstellen zum Empfang von Wetterdaten verfügt, kann der vom Fahrer vorgegebene maximale Reibwert plausibilisiert und/oder modifiziert werden. Beispielsweise kann es sich hierbei um ein Thermometer zur Messung der Außentemperatur, einen Regensensor, oder einen Empfänger für Wetterdaten (TMC) handeln.

Das System verfügt über Sensoren, die Vorgaben des Fahrers über Lenkrad und Gaspedal erfassen, also z.B. einen Lenkradwinkelsensor. Auch die Daten von ESC-Sensoren, welche in modernen Fahrzeugen vielfach ohnehin vorhanden sind und insbesondere die Gierrate des Fahrzeugs, die Querbeschleunigung und die Radgeschwindigkeiten messen, werden berücksichtigt.

Anhand der Position des Fahrzeugs und digitalen Kartendaten werden Streckendaten bzw. Streckinformationen ermittelt und einem elektronischen Steuergerät zur Bereitstellung der Navi-ESC-Funktionen zugeführt. Diese können longitudinal oder lateral auf das Fahrzeug einwirken, d.h. die Längs-oder Querdynamik beeinflussen. Das elektronische Steuergerät kann darüber hinaus weitere Funktionen aufweisen, beispielhaft dargestellt sind eine Abstandsregelung ACC und ein Notbremsassistent EBA. Zweckmäßigerweise stellt das elektronische Steuergerät darüber hinaus Funktionen wie eine Bremsschlupfregelung und eine Fahrdynamikregelung bereit.

Wenn anhand der momentanen Fahrzeuggeschwindigkeit, des ausnutzbaren Reibwerts und Streckeninformationen eine kritische Fahrsituation zu erwarten ist, weil der ausnutzbare Reibwert nicht hinreichend ist, um die für ein Durchfahren der nächstliegenden Kurve mit der aktuellen Geschwindigkeit nötigen Querkräfte aufzubringen, dann greift das Navi-ESC zunächst longitudinal ein: Das Fahrzeug wird vor dem Erreichen des Scheitelpunkts der Kurve, an dem der lokale Kurvenradius minimal ist, durch Bremseingriffe an einer oder mehreren Achsen des Kraftfahrzeugs abgebremst, wodurch sich die auftretenden Querkräfte verringern.

Daneben kann ein Navi-ESC radindividuelle Bremskräfte an einem oder mehreren Rädern des Fahrzeugs aufbringen, d.h. die Querdynamik beeinflussen, um das Durchfahren der anhand von Fahrervorgaben und Kartendaten ermittelten Sollbahn zu gewährleisten. Dies ermöglicht es, ein sicheres Fahrverhalten auch dann noch bereitzustellen, wenn z.B. aufgrund von Vorgaben hinsichtlich der maximal zulässigen Verzögerung eine hinreichende Abbremsung des Fahrzeugs vor Durchfahren des Scheitelpunkts der Kurve nicht möglich ist.

Zur Information und/oder Unterstützung des Fahrers kann darüber hinaus ein Lenkradmoment auf eine elektronische Servolenkung (IPAS) aufgebracht werden, und/oder eine haptische Information durch geänderte Rückstellkräfte eines aktiven Fahrpedals (AFFP) erfolgen, sofern die entsprechenden Aktoren vorhanden sind.

Wenn anhand der aktuellen Informationen eine kritische Fahrsituation zu erwarten ist, wird der Fahrer optisch und/oder akustisch auf die Gefahr hingewiesen, z.B. durch eine Signalleuchte in der Konsole, ein Head-Up-Display, einen Signalton oder eine Sprachausgabe.

Das Navi-ESC kann eine Reduzierung des Antriebsmoments bzw. eine Antriebsreduzierung und/oder den Aufbau von Bremsmoment an einem oder mehreren Rädern des Fahrzeugs anfordern. Das Bremssystem kann hydraulische Radbremsen, elektromechanische Radbremsen und/oder einen oder mehrere Generatoren zum Aufbringen eines Schleppmoments aufweisen, die entsprechend angesteuert werden können.

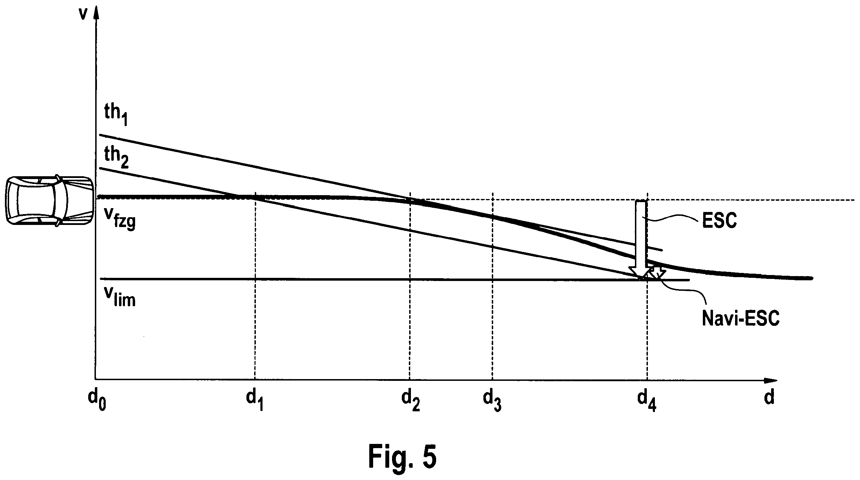

Ein erstes Ausführungsbeispiel des erfindungsgemäßen Verfahrens ist in Figur 5 gezeigt. Hierbei ist in einem Diagramm die Geschwindigkeit des Fahrzeugs v_{fzg} in Abhängigkeit von der durchfahrenen Strecke d dargestellt. Bei dem vorgegebenen Reibwert ist ein sicheres Durchfahren der Kurve mit einer Grenzgeschwindigkeit vₗᵢₘ möglich.

Das Fahrzeug fährt am Punkt d₀ in eine Kurve ein, die zunächst weit geschwungen ist und sich zum Scheitelpunkt d₄ zuzieht, d.h. der Kurvenradius nimmt ab. In diesem Ausführungsbeispiel erfolgt eine Warnung des Fahrers, wenn die Fahrgeschwindigkeit einen Warnschwellenwert th₂ überschreitet. Die Grenzgeschwindigkeit muss im Scheitelpunkt der Kurve, an dem der minimale lokale Kurvenradius herrscht, eingehalten werden. Aus diesem Grund nimmt Warnschwellenwert th₂ mit der Annäherung an den Scheitelpunkt ab. Weiterhin erfolgen Bremseingriffe, wenn die Fahrgeschwindigkeit einen Eingriffsschwellenwert th₁ überschreitet. Dieser liegt höher als der Warnschwellenwert, um Fehleingriffe zu vermeiden; er nimmt mit sinkendem Abstand vom Scheitelpunkt ebenfalls ab.

Wenn das Fahrzeug die Kurve durchfährt, wird also an Punkt d₁ eine Warnung des Fahrers ausgelöst. Diese kann beispielsweise über ein Rütteln eines aktiven Fahrpedals oder eine visuelle Anzeige erfolgen. Fährt das Fahrzeug mit ungeänderter Geschwindigkeit weiter, so erfolgt an Punkt d₂ ein Bremseingriff, um die Fahrgeschwindigkeit zu der Grenzgeschwindigkeit hinzuführen.

Gemäß einer alternativen Strategie erfolgt ein Bremseingriff erst dann, wenn der Eingriffsschwellenwert überschritten wird und der Fahrer um mehr als einen vorgegebenen Lenkschwellenwert einlenkt, was in diesem Beispiel an Punkt d₃ erfolgt. Diese alternative Strategie verringert die Wahrscheinlichkeit von Fehleingriffen, da das Einlenken des Fahrers als Bestätigung abgewartet wird. Allerdings sind durch den späteren Eingriffsbeginn dann stärkere Bremseingriffe erforderlich.

Im dargestellten Beispiel ist die maximal zulässige Fahrzeugverzögerung begrenzt, weshalb die Grenzgeschwindigkeit am Scheitelpunkt d₄ noch leicht überschritten wurde. Daher erfolgt zusätzlich ein radindividueller Bremseingriff, um ein zusätzliches Giermoment aufzubringen, dessen Intensität mit dem Pfeil navi-ESC angedeutet ist. Ein herkömmliches Fahrdynamikregelsystem würde demgegenüber erst nach einer deutlichen Abweichung zwischen Soll- und Istkurs eingreifen, weshalb ein starker und unkomfortabler Eingriff erfolgen muss - dies ist beispielhaft durch den Pfeil ESC angedeutet. Durch die beschriebene Strategie wird somit sowohl die Sicherheit als auch der Fahrkomfort erhöht.

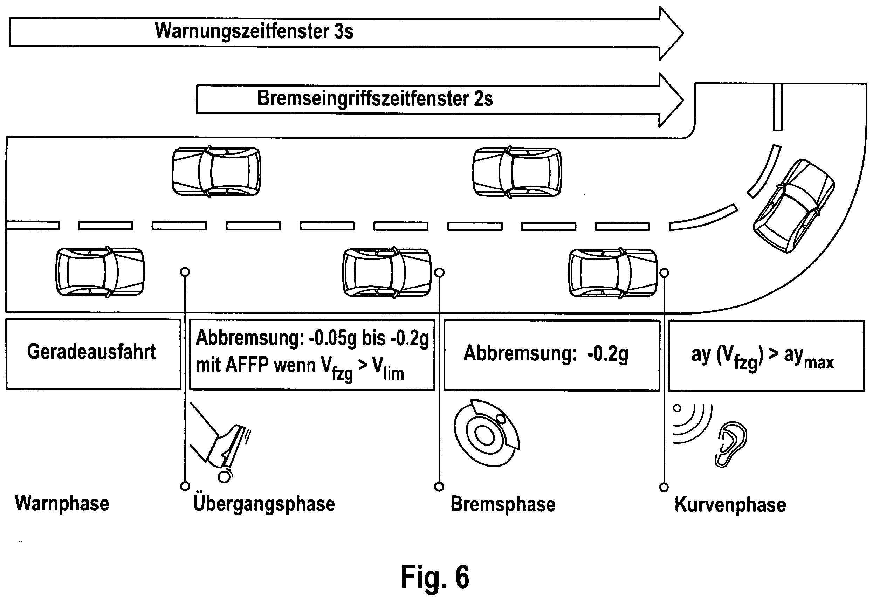

Figur 6 zeigt ein zweites Ausführungsbeispiel des erfindungsgemäßen Verfahrens. Der Fahrer kann hierbei eine von drei Eingriffsstrategien auswählen, die beispielsweise mit Sport (S), Normal (N), oder Komfort (C) bezeichnet werden. Je nach gewähltem Modus bzw. Eingriffsstrategie nimmt der maximal auszunutzende Reibwert von 0,7 (S) über 0,25 (N) auf 0,15 (C) ab. In der Figur ist ein Fahrzeug angedeutet, welches sich einer Kurve nähert, wobei vier Phasen unterschieden werden können, eine Warnphase, eine Übergangsphase, eine Bremsphase und eine Kurvenphase. Welche Aktion in der jeweiligen Phase durchgeführt wird, ist hierbei vom gewählten Modus abhängig.

Beim Zufahren auf eine Kurve (also noch während das Fahrzeug geradeaus fährt) erfolgt in einer ersten Phase, der Warnphase, eine Information des Fahrers über eine bevorstehende Beispielsweise bezieht sich diese Warnung auf ein 3s in die Zukunft reichendes Fahrtintervall (oder alternativ eine vorgegebene Distanz).

In einer zweiten Phase, der Übergangsphase, erfolgt eine haptische Warnung des Fahrers über ein aktives Fahrpedal (AFFP), wenn die Fahrgeschwindigkeit v_{fzg} die Grenzgeschwindigkeit Vₗᵢₘ übersteigt. Im Komfortmodus (C) wird in dieser Phase eine automatische Reduzierung des Antriebsmoments vorgenommen, während im Normalmodus (N) das Fahrzeug erst nach dem Lösen des Fahrpedals verlangsamt wird und im Sportmodus (S) in dieser Phase kein Bremseingriff erfolgt. Beispielsweise kann der autonome Brems- bzw. Antriebseingriff im innerhalb eines Bremseingriffszeitfensters von 2s vor der Kurve erfolgen.

In einer dritten Phase, der Bremsphase, erfolgt eine Abbremsung des Fahrzeugs mit einer vorgegebenen Verzögerung, die zweckmäßigerweise abhängig vom Modus gewählt wird, z.B. -0,2g (S), -0,15g (N) und -0,1g (C). Gegebenenfalls kann auch eine zusätzliche Warnung durch eine dedizierte Warnleuchte erfolgen, wenn aufgrund sehr hoher Geschwindigkeit trotz Bremseingriff eine kritische Fahrsituation droht.

Wenn die Fahrgeschwindigkeit v_{fzg} auch in der Kurvenphase bzw. nahe bei oder im Scheitelpunkt noch so hoch ist, dass die Querbeschleunigung ay(v_{fzg}) größer als die aus dem vorgegebenen Reibwert resultierende maximal zulässige Querbeschleunigung ayₘₐₓ ist, so können radindividuelle Bremseingriffe durch ein ESC-System erfolgen. Hierbei ist es zweckmäßig, das ESC-System bzw. die Fahrdynamikregelung vorzukonditionieren, z.B. indem die Schwellen angepasst werden.

Prinzipiell wäre auch eine abweichende Anzahl verschiedener Modi oder eine direkte Vorwahl eines festen Reibwerts möglich, wobei die Strategie vorzugsweise je nach Größe des voreingestellten Reibwerts angepasst wird.

Weiterhin kann eine Adaption des vom Fahrer vorgegebenen Reibwerts anhand weiterer Informationen erfolgen, wobei insbesondere per Funk empfangene Wetterdaten (hier als Wetterbericht (TMC) bezeichnet) berücksichtigt werden können. Je nach vom Fahrer vorgewählten Modus kann hierbei das Ausmaß der Adaption geeignet gewählt werden.

Beispielsweise kann der maximal auszunutzende Reibwert bei der Voreinstellung Sport bei einer Vorhersage von Schnee oder Eis stärker abgesenkt werden als ein bereits niedrig vorgewählter Reibwert bei der Voreinstellung Komfort.

Alternativ kann eine Anpassung des maximal auszunutzenden Reibwerts auch anhand der gemessenen Außentemperatur erfolgen, wobei insbesondere bei einer Temperatur mit Schnee- bzw. Eisgefahr (z.B. unter 4°C) der maximal auszunutzende Reibwert um einen festen vorgegebenen Wert verringert werden kann.

Es kann in einer Ausführungsform der Erfindung auch vorgesehen sein, den vorgewählten Reibwert in Abhängigkeit von der Stellung des Fahrpedals und den aktuellen Umgebungsbedingungen (wie Außentemperatur oder Luftfeuchtigkeit) zu variieren, insbesondere durch Vorgabe einer Kennlinie. Hierbei kann eine beispielhafte Strategie darin bestehen, auf Bremseingriffe vollständig zu verzichten, wenn der Fahrer einen Sportmodus wählt und eine Außentemperatur von über 7°C erkannt wird.

Gemäß einer weiteren bevorzugten Ausführungsform der Erfindung kann der Fahrer dem System einen niedrigen Reibwert vorgeben, um komfortabel in Kurven einzufahren. Das System übernimmt dann die Geschwindigkeitsanpassung automatisch und komfortabel. Über ein sehr starkes "Gas geben", also eine Betätigung des Fahrpedals, die einen vorgegebenen Schwellenwert übersteigt, kann die Geschwindigkeitsanpassung "übersteuert" werden, indem der Fahrer (ähnlich einer "Kick Down" Funktion des AutomatikGetriebes) die Reibwertvorgabe um einen vorgegebenen Betrag erhöht. In dieser Ausführungsform umfasst die Mensch-Maschine-Schnittstelle also zwei Bedienelemente, einen Schalter oder einen Touchscreen zur Vorgabe eines ersten Reibwerts und das Fahrpedal (bzw. ein "Durchtreten" des Fahrpedals) zur Vorgabe eines zweiten Reibwerts bzw. eines Erhöhungsbetrags.

Das erfindungsgemäße Verfahren ermöglicht eine Erhöhung der Sicherheit gerade in für den Fahrer schlecht einsehbaren Kurven. Indem der vorgegebene Reibwert und/oder das Vorliegen einer Kurve zweckmäßigerweise anhand von weiteren Informationen wie einer Außentemperatur und/oder Daten einer Umfeldsensorik plausibilisiert und/oder modifiziert wird, können unangemessene Eingriffe vermieden werden.

## Patentansprüche

1. Verfahren zur Verbesserung der Fahrstabilität eines Kraftfahrzeugs, bei dem fahrerunabhängige Bremseingriffe ausgelöst werden, wenn anhand von Streckeninformationen und momentanen Positionsdaten des Kraftfahrzeugs eine kritische Fahrsituation zu erwarten ist, **dadurch gekennzeichnet, dass** der Fahrer über eine Mensch-Maschine-Schnittstelle eine Information zum maximal auszunutzenden Reibwert vorgibt, welcher der Vorhersage einer kritischen Fahrsituation zu Grunde gelegt wird.

2. Verfahren nach Anspruch 1, **dadurch gekennzeichnet, dass** anhand von einer oder mehreren momentanen Fahrzustandsgrößen, den Streckeninformationen und den momentanen Positionsdaten des Kraftfahrzeugs für eine vorgegebene Distanz ein zum sicheren Befahren einer vorbestimmten Strecke benötigter Reibwert ermittelt wird, wobei vorzugsweise die vorgegebene Distanz, über welche der zum sicheren Befahren der vorbestimmten Strecke benötigte Reibwert ermittelt wird, in Abhängigkeit von der momentanen Fahrgeschwindigkeit gewählt wird.

3. Verfahren nach Anspruch 2, **dadurch gekennzeichnet, dass** der Fahrer über den zum sicheren Befahren der vorbestimmten Strecke benötigten Reibwert informiert wird, die vorzugsweise zusätzlich eine Information über eine Wetterlage bereitstellt, bei der ein entsprechender Reibwert zu erwarten ist.

4. Verfahren nach mindestens einem der vorhergehenden Ansprüche, **dadurch gekennzeichnet, dass** der Fahrer haptisch und/oder visuell darauf hingewiesen wird, insbesondere durch ein aktive Rückstellkräfte aufweisendes Fahrpedal, wenn zur Vermeidung kritischer Fahrsituationen eine Verringerung der Fahrgeschwindigkeit erfolgen sollte.

5. Verfahren nach mindestens einem der vorhergehenden Ansprüche, **dadurch gekennzeichnet, dass** anhand von der Information zum maximal auszunutzenden Reibwert, den Streckeninformationen und den momentanen Positionsdaten des Kraftfahrzeugs für eine vorgegebene Distanz eine Grenzgeschwindigkeit zum sicheren Befahren der vorbestimmten Strecke ermittelt wird, wobei vorzugsweise die vorgegebene Distanz, über welche der zum sicheren Befahren der vorbestimmten Strecke benötigte Reibwert ermittelt wird, in Abhängigkeit von der momentanen Fahrgeschwindigkeit gewählt wird.

6. Verfahren nach Anspruch 5, **dadurch gekennzeichnet, dass** die momentane Fahrgeschwindigkeit zu der Grenzgeschwindigkeit hingeführt wird, indem Bremseingriffe an zwei oder mehr Rädern des Kraftfahrzeugs erfolgen und/oder das Antriebsmoment verringert wird.

7. Verfahren nach Anspruch 6, **dadurch gekennzeichnet, dass** die aufgebrachten Bremskräfte in Abhängigkeit von der Differenz zwischen momentaner Fahrgeschwindigkeit und Grenzgeschwindigkeit und/oder der Distanz zu dem Punkt der Strecke mit minimalem Kurvenradius gewählt werden.

8. Verfahren nach Anspruch 6 oder 7, **dadurch gekennzeichnet, dass** die aufgebrachten Bremskräfte begrenzt und/oder die Änderung des Antriebsmoments gegenüber der Fahrpedalstellung begrenzt werden, derart, dass die Fahrzeuglängsverzögerung einen vorbestimmten Verzögerungsschwellenwert nicht überschreitet.

9. Verfahren nach mindestens einem der vorhergehenden Ansprüche, **dadurch gekennzeichnet, dass** die vom Fahrer vorgegebene Information zum maximal auszunutzenden Reibwert anhand von einer oder mehreren weiteren unabhängigen Größen, wie den Daten eines Regensensors und/oder aktuellen Wetterinformationen, modifiziert und/oder plausibilisiert wird, wobei insbesondere eine Minimumbildung zweier unabhängiger Werte erfolgt.

10. Verfahren nach mindestens einem der vorhergehenden Ansprüche, **dadurch gekennzeichnet, dass** ein Bremseingriff erst dann erfolgt, wenn das Vorliegen einer Kurve durch eine Lenkbewegung des Fahrers und/oder das Setzen eines Blinkers und/oder anhand von Informationen einer Umfeldsensorik, bestätigt wurde.

11. Verfahren nach mindestens einem der vorhergehenden Ansprüche, **dadurch gekennzeichnet, dass** das Kraftfahrzeug Mittel zur Regelung des Abstands zu einem vorausfahrenden Fahrzeug und/oder Mittel zur Auslösung einer Notbremsung beim Erkennen von Hindernissen auf der Fahrbahn aufweist, wobei die Mittel ein mit Umfeldsensorik verbundenes elektronisches Steuergerät umfassen, und dass der Sollwert der Abstandsregelung und/oder der Mindestabstand, bei dessen Unterschreiten eine Notbremsung erfolgt, in Abhängigkeit der vom Fahrer vorgegebenen Information zum maximal auszunutzenden Reibwert gewählt und/oder modifiziert werden.

12. System zur Regelung der Fahrstabilität eines Kraftfahrzeugs, aufweisend Mittel zum fahrerunabhängigen Aufbau von Bremskräften an einem oder mehreren Rädern des Kraftfahrzeugs, Mittel zur Erfassung von einer Information über den momentanen Fahrzustand, Mittel zur Bestimmung der aktuellen Fahrzeugposition, und Mittel zur Bereitstellung von Streckeninformationen, **gekennzeichnet durch** eine Mensch-Maschine-Schnittstelle zur Eingabe von einer Information zum maximal auszunutzenden Reibwert, und ein elektronisches Steuergerät, welches ein Verfahren nach mindestens einem der Ansprüche 1 bis 11 ausführt.

13. System nach Anspruch 12, **gekennzeichnet durch** Mittel für eine haptische und/oder visuelle Information des Fahrers über eine zu erwartende kritische Situation, insbesondere ein aktive Rückstellkräfte aufweisendes Fahrpedal, und vorzugsweise Mittel zum Schätzen eines zum sicheren Befahren einer vorbestimmten Strecke benötigten Reibwerts.

14. System nach Anspruch 12 oder 13, **gekennzeichnet durch** Mittel zur Regelung des Abstands zu vorausfahrenden Fahrzeugen und/oder Mittel zur Regelung der Fahrzeuggeschwindigkeit, wobei das oder die Mittel ein mit Umfeldsensorik, vorzugsweise einer oder mehrerer Kameras, verbundenes elektronisches Steuergerät umfassen.

15. System nach mindestens einem der Ansprüche 12 bis 14, **gekennzeichnet durch** Mittel zur Modifikation des Fahrwerks, insbesondere aktive Dämpfer und/oder aktive Wankstabilisatoren und/oder eine Überlagerungslenkung an der Vorderachse und/oder eine Hinterachslenkung.

16. Verwendung eines Systems nach mindestens einem der Ansprüche 12 bis 15 in einem Kraftfahrzeug, das zumindest zeitweise von einem oder mehreren Elektromotoren angetrieben wird.

## Claims

1. Method for improving the driving stability of a motor vehicle in which driver-independent braking interventions are triggered if a critical driving situation is to be expected on the basis of route information and instantaneous position data of the motor vehicle, **characterized in that** the driver predefines, via a human/machine interface, information about the maximum coefficient of friction to be utilized, which information is used as the basis for the prediction of a critical driving situation.

2. Method according to Claim 1, **characterized in that** a coefficient of friction which is required for safely driving along a predetermined route is determined for a predefined distance on the basis of one or more instantaneous driving state variables, the route information and the instantaneous position data of the motor vehicle, wherein the predefined distance over which the coefficient of friction which is required for safely driving along the predetermined route is preferably selected as a function of the instantaneous velocity.

3. Method according to Claim 2, **characterized in that** the driver is informed about the coefficient of friction which is required to safely drive along the predetermined route, which preferably additionally makes available information about a weather situation in which a corresponding coefficient of friction is to be expected.

4. Method according to at least one of the preceding claims, **characterized in that** the driver is informed haptically and/or visually, in particular by means of an accelerator pedal having active restoring forces, if a reduction in the velocity should take place in order to avoid critical driving situations.

5. Method according to at least one of the preceding claims, **characterized in that** a limiting speed for safely driving along the predetermined route is determined for a predefined distance on the basis of the information relating to the maximum coefficient of friction to be utilized, the route information and the instantaneous position data of the motor vehicle, wherein the predefined distance over which the coefficient of friction which is required to safely drive along the predetermined route is determined is preferably selected as a function of the instantaneous velocity.

6. Method according to Claim 5, **characterized in that** the instantaneous velocity is added to the limiting speed **in that** braking interventions take place at two or more wheels of the motor vehicle and/or the drive torque is reduced.

7. Method according to Claim 6, **characterized in that** the applied braking forces are selected as a function of the difference between the instantaneous velocity and the limiting speed and/or the distance from the point on the route with a minimum bend radius.

8. Method according to Claim 6 or 7, **characterized in that** the applied braking forces are limited and/or the change in the drive torque with respect to the accelerator position is limited, in such a way that the longitudinal deceleration of the vehicle does not exceed a predetermined deceleration threshold value.

9. Method according to at least one of the preceding claims, **characterized in that** the information which is predefined by the driver and which relates to the maximum coefficient of friction to be utilized is modified on the basis of one or more further independent variables such as the data of a rain sensor and/or current weather information and/or the plausibility of said information is checked, wherein, in particular, a minimum is formed between two independent values.

10. Method according to at least one of the preceding claims, **characterized in that** a braking intervention does not take place until the presence of a bend has been confirmed by a steering movement of the driver and/or the setting of a flashing indicator light and/or on the basis of information of a surroundings sensor system.

11. Method according to at least one of the preceding claims, **characterized in that** the motor vehicle has means for controlling the distance from a vehicle traveling ahead and/or means for triggering an emergency braking operation when obstacles are detected on the roadway, wherein the means comprise an electronic control unit which is connected to the surroundings sensor system, and **in that** the setpoint value of the distance controlling device and/or the minimum distance, the undershooting of which triggers emergency braking, are/is selected and/or modified as a function of the information which is predefined by the driver and relates to the maximum coefficient of friction to be utilized.

12. System for regulating the driving stability of a motor vehicle, having means for the driver-independent building up of braking forces at one or more wheels of the motor vehicle, means for sensing information about the instantaneous driving state, means for determining the current vehicle position, and means for making available route information, **characterized by** a human/machine interface for inputting information on the maximum coefficient of friction to be utilized, and an electronic control device which carries out a method according to at least one of Claims 1 to 11.

13. System according to Claim 12, **characterized by** means for haptically and/or visually informing the driver about a critical situation to be expected, in particular an accelerator pedal having active restoring forces, and preferably means for estimating a coefficient of friction which is required to safely drive along a predefined route.

14. System according to Claim 12 or 13, **characterized by** means for regulating the distance from vehicles traveling ahead and/or means for regulating the vehicle speed, wherein the one or more means comprise an electronic control device which is connected to a surroundings sensor system, preferably one or more cameras.

15. System according to at least one of Claims 12 to 14, **characterized by** means for modifying the chassis, in particular active shock absorbers and/or active roll stabilizers and/or a superimposition steering system at the front axle and/or a rear-axle steering system.

16. Use of a system according to at least one of Claims 12 to 15 in a motor vehicle which is at least temporarily driven by one or more electric motors.

## Revendications

1. Procédé pour améliorer la stabilité de conduite d'un véhicule automobile, dans lequel on déclenche des interventions de freinage indépendantes du conducteur, lorsqu'il faut s'attendre à une situation de conduite critique sur la base d'informations de la route et de données de position instantanées du véhicule automobile, **caractérisé en ce que** le conducteur définit par une interface homme-machine une information concernant le coefficient de friction maximal à utiliser, qui sert de base à la prédiction d'une situation de conduite critique.

2. Procédé selon la revendication 1, **caractérisé en ce que** l'on détermine, à l'aide d'une ou de plusieurs grandeur(s) instantanée(s) d'état de roulage, des informations de la route et des données de position instantanées du véhicule automobile pour une distance définie un coefficient de friction nécessaire pour parcourir en toute sécurité un trajet prédéterminé, dans lequel de préférence on choisit la distance définie sur laquelle on détermine le coefficient de friction nécessaire pour parcourir en toute sécurité le trajet prédéterminé, en fonction de la vitesse de roulage instantanée.

3. Procédé selon la revendication 2, **caractérisé en ce que** le conducteur est informé au sujet du coefficient de friction nécessaire pour parcourir en toute sécurité le trajet prédéterminé, qui fournit également une information sur la situation météo, pour laquelle il faut envisager un coefficient de friction correspondant.

4. Procédé selon au moins une des revendications précédentes, **caractérisé en ce que** le conducteur est avisé de façon tactile et/ou visuelle, en particulier par une pédale des gaz présentant des forces de rappel actives, du moment où il faut opérer une diminution de la vitesse de roulage pour éviter des situations de conduite critiques.

5. Procédé selon au moins une des revendications précédentes, **caractérisé en ce que** l'on détermine à l'aide de l'information concernant le coefficient de friction maximal à utiliser, des informations de la route et des données de position instantanées du véhicule automobile pour une distance définie, une vitesse limite pour parcourir en toute sécurité le trajet prédéterminé, dans lequel de préférence on choisit la distance définie, sur laquelle on détermine le coefficient de friction nécessaire pour parcourir en toute sécurité le trajet prédéterminé, en fonction de la vitesse de roulage instantanée.

6. Procédé selon la revendication 5, **caractérisé en ce que** l'on ramène la vitesse de roulage instantanée à la vitesse limite, par le fait qu'il se produit des interventions de freinage sur deux roues ou plus du véhicule automobile et/ou que le couple moteur est réduit.

7. Procédé selon la revendication 6, **caractérisé en ce que** les forces de freinage appliquées sont choisies en fonction de la différence entre la vitesse de roulage instantanée et la vitesse limite et/ou de la distance jusqu'au point de la route ayant un rayon de courbure minimal.

8. Procédé selon la revendication 6 ou 7, **caractérisé en ce que** les forces de freinage appliquées sont limitées et/ou le changement du couple moteur par rapport à la position de la pédale des gaz est limité, de telle manière que la décélération longitudinale du véhicule ne dépasse pas une valeur de seuil de décélération prédéterminée.

9. Procédé selon au moins une des revendications précédentes, **caractérisé en ce que** l'information définie par le conducteur concernant le coefficient de friction maximal à utiliser est modifiée et/ou rendue plausible à l'aide d'une ou de plusieurs autre(s) grandeur(s) indépendante(s), telles que des données d'un détecteur de pluie et/ou des informations météo actuelles, dans lequel il se produit en particulier une formation minimale de deux valeurs indépendantes.

10. Procédé selon au moins une des revendications précédentes, **caractérisé en ce qu'**une intervention de freinage ne se produit que lorsque la présence d'un virage a été constatée par un mouvement de direction du conducteur et/ou l'allumage d'un clignotant et/ou à l'aide d'informations d'un détecteur de proximité.

11. Procédé selon au moins une des revendications précédentes, **caractérisé en ce que** le véhicule automobile présente des moyens pour réguler la distance par rapport à un véhicule précédent et/ou des moyens pour déclencher un freinage d'urgence lors de la détection d'obstacles sur la chaussée, dans lequel les moyens comprennent un appareil de commande électronique connecté au détecteur de proximité, et **en ce que** la valeur de consigne de la régulation de distance et/ou de la distance minimale, dont le dépassement déclenche un freinage d'urgence, est choisie et/ou modifiée en fonction de l'information définie par le conducteur concernant le coefficient de friction maximal à utiliser.

12. Système de régulation de la stabilité de conduite d'un véhicule automobile, présentant des moyens pour produire indépendamment du conducteur des forces de freinage à une ou plusieurs roue (s) du véhicule automobile, des moyens pour détecter une information concernant l'état de roulage instantané, des moyens pour déterminer la position actuelle du véhicule, et des moyens pour fournir des informations relatives à la route, **caractérisé par** une interface homme-machine permettant d'entrer une information concernant le coefficient de friction maximal à utiliser, et un appareil de commande électronique, qui exécute un procédé selon au moins une des revendications 1 à 11.

13. Système selon la revendication 12, **caractérisé par** des moyens pour une information tactile et/ou visuelle du conducteur concernant une situation critique à envisager, en particulier une pédale des gaz présentant des forces de rappel actives, et de préférence des moyens pour évaluer un coefficient de friction nécessaire pour parcourir en toute sécurité un trajet prédéterminé.

14. Système selon la revendication 12 ou 13, **caractérisé par** des moyens pour réguler la distance par rapport à des véhicules précédents et/ou des moyens pour réguler la vitesse du véhicule, dans lequel les moyens comprennent un appareil de commande électronique connecté à un détecteur de proximité, de préférence une ou plusieurs caméra(s).

15. Système selon au moins une des revendications 12 à 14, **caractérisé par** des moyens pour modifier le train de roulement, en particulier des amortisseurs actifs et/ou des stabilisateurs de lacet et/ou une direction prioritaire à l'essieu avant et/ou une direction de l'essieu arrière.

16. Utilisation d'un système selon au moins une des revendications 12 à 15 dans un véhicule automobile, qui est entraîné au moins temporairement par un ou plusieurs moteur(s) électrique(s).
